# EUROPÄISCHE PATENTANMELDUNG

(11) **EP 1 849 672 A2**
(43) Veröffentlichungstag der Anmeldung: **31.10.2007**
(21) Anmeldenummer: 07008381.1
(22) Anmeldetag: 25.04.2007
(51) Int. Cl.: B60T 17/00, B01D 53/04

(54) **Kartusche, Druckluftaufbereitungsanlage und Verfahren zum Betrieb einer Druckluftaufbereitungsanlage**

(30) Priorität: 28.04.2006 DE 102006019865
(71) Anmelder: Haldex Brake Products GmbH, 69123 Heidelberg (DE)
(72) Erfinder: Nöcker, Joachim, 69412 Eberbach (DE); Hege, Stefan, 69214 Eppelheim (DE)
(74) Vertreter: Rehberg Hüppe + Partner

(57) **Zusammenfassung**

Die Erfindung betrifft eine Kartusche (1) für eine Druckluftaufbereitungsanlage (47) eines Kraft- oder Nutzfahrzeugs.

Erfindungsgemäß ist in der Kartusche (1) ein Sensor (38) angeordnet, mit dem beispielsweise eine Feuchte eines Behandlungsmittels der Druckluft, insbesondere eines Granulats, sensiert wird. In einer Steuereinrichtung (56) erfolgt nach Maßgabe des Signals des Sensors (38) eine selbsttätige Umschaltung zwischen einem Druckluftaufbereitungskreislauf (48) und einem Regenerationskreislauf (53). Hierdurch können sowohl die Phasen für die Druckluftaufbereitung als auch für eine Regeneration des Behandlungsmittels optimiert werden.

## Beschreibung

### TECHNISCHES GEBIET DER ERFINDUNG

Die Erfindung betrifft eine Kartusche zum Reinigen und/oder Trocknen von Druckluft in Druckluftaufbereitungsanlagen von Kraftfahrzeugen gemäß dem Oberbegriff des Anspruchs 1. Weiterhin betrifft die Erfindung eine Druckluftaufbereitungsanlage für Kraftfahrzeuge gemäß dem Oberbegriff des Anspruchs 16. Eine weitere Ausgestaltung der Erfindung betrifft eine Druckluftaufbereitungsanlage gemäß dem Oberbegriff des Anspruchs 23. Schließlich betrifft die Erfindung ein Verfahren zum Betrieb einer Druckluftaufbereitungsanlage gemäß den Merkmalen des Oberbegriffes des Anspruchs 18.

### STAND DER TECHNIK

Druckluftaufbereitungsanlagen werden in Nutz- oder Kraftfahrzeugen eingesetzt, um beispielsweise einen Verbraucher oder einen Behälter mit Druckluft zu versorgen. Wird hierzu Luft von einem Kompressor aus einem Reservoir oder der Umgebung gefördert, kann eine Trocknung der Luft mit einer Entfernung von Feuchtigkeit und/oder eine Reinigung der Luft hinsichtlich unerwünschter Bestandteile wie Schmutzpartikel, Öl o. ä. erforderlich sein. Hierzu finden einmalige oder auswechselbare Kartuschen Einsatz, in denen ein geeignetes Behandlungsmittel vorgesehen ist, welches mit der durch die Kartusche geleiteten Luft in Wechselwirkung tritt und welches die verunreinigenden Bestandteile sowie Feuchtigkeit aufnehmen kann. Nach einer gewissen Betriebsdauer der Kartusche ist allerdings das Behandlungsmittel in einem Maß mit Feuchtigkeit und oder Verunreinigungen angereichert, dass mit der Kartusche die gewünschte Reinigungs- oder Trocknungswirkung nicht mehr erzielt werden kann. Aus diesem Grund erfolgt in einem Regenerationskreislauf eine Regeneration des Behandlungsmittels, wobei der Druckluftkreislauf und der Regenerationskreislauf gleichzeitig oder abwechseln eingesetzt werden können. Eine Steuereinrichtung aktiviert und deaktiviert nach vorgegebenen Zeitintervallen den Druckluftkreislauf und den Regenerationskreislauf.

DE 20 2004 019 045 U1 offenbart ein System zur Trocknung und Entölung gasförmiger Fluidströme, bei welchem ein Abscheidemittel eingesetzt ist. Bei einem derartigen Abscheidemittel kann es sich um Prallbleche, einen Zyklonabscheider, einen angetriebenen Zentrifugalabscheider, einen Koaleszenzabscheider oder einen elektrostatischen Abscheider handeln. Die abgeschiedene Flüssigkeit wird in einem Speicher in der Art einer Auffangwanne aufgefangen. In dem Speicher ist ein Mittel zur Sentierung der gesammelten Flüssigkeit oder Feststoffpartikel angeordnet, wobei das Mittel zur Sentierung ein Sensorsignal zur Bestimmung der abgeschiedenen Flüssigkeitsmenge oder Feststoffpartikelmenge ausgibt.

### AUFGABE DER ERFINDUNG

Der vorliegenden Erfindung liegt die Aufgabe zugrunde, eine Kartusche, eine Druckluftaufbereitungsanlage sowie ein Verfahren zum Betrieb einer Druckluftaufbereitungsanlage vorzuschlagen, für die ein Druckluftaufbereitungsbetrieb sowie der Regenerationsbetrieb und/oder eine Aktivierung und Deaktivierung dieser beiden Betriebsarten verbessert ist.

### LÖSUNG

Die vorliegende Erfindung wird gelöst durch eine Kartusche gemäß den Merkmalen des Anspruchs 1. Weitere Ausgestaltungen einer derartigen erfindungsgemäßen Kartusche ergeben sich entsprechend den abhängigen Ansprüchen 2-15. Eine weitere Lösung der der Erfindung zugrunde liegenden Aufgabe ist gegeben durch eine Druckluftaufbereitungsanlage gemäß den Merkmalen des Anspruchs 16. Eine weitere erfindungsgemäße Ausgestaltung einer Druckluftaufbereitungsanlage ergibt sich entsprechend dem abhängigen Anspruch 17. Eine Lösung der der Erfindung zugrunde liegenden Aufgabe ist weiterhin gegeben durch ein Verfahren gemäß den Merkmalen des Anspruchs 18. Weitere Ausgestaltungen des erfindungsgemäßen Verfahrens ergeben sich gemäß den abhängigen Ansprüchen 19-22. Eine alternative Lösung der der Erfindung zugrunde liegenden Aufgabe ist gegeben durch eine Druckluftaufbereitungsanlage gemäß den Merkmalen des Anspruchs 23 sowie in weiterer Ausgestaltung der Erfindung gemäß dem abhängigen Anspruch 24.

### BESCHREIBUNG DER ERFINDUNG

Erfindungsgemäß findet die Kartusche Einsatz in einer Druckluftaufbereitungsanlage, die einer Versorgung eines Verbrauchers oder eines Reservoirs in einem Kraftfahrzeug mit Druckluft dienen kann und/oder einer Aufbereitung von Druckluft. In der Kartusche ist zum Reinigen und/oder Trocknen der Druckluft ein Behandlungsmittel vorgesehen, bei dem es sich beispielsweise um ein festes Filter, ein Granulat oder eine Reaktionsflüssigkeit handeln kann.

Die vorliegende Erfindung beruht auf der Erkenntnis, dass für aus dem Stand der Technik bekannte Druckluftaufbereitungsanlagen eine Umschaltung zwischen einem Druckluftaufbereitungskreislauf und einem Regenerationskreislauf nach vorbestimmten Zeitintervallen oder vorbestimmten Luftfördermengen erfolgt. Die Erfindung hat hier erkannt, dass die Zeiträume oder Fördermengen, nach denen einerseits eine Regeneration des Behandlungsmittels erforderlich ist und die andererseits für eine erfolgreiche Regeneration notwendig sind, unterschiedlich sein können, beispielsweise je nach
- der Qualität der der Druckluftaufbereitungsanlage zugeführten Luft,
- den Umgebungsbedingungen,
- dem Betriebsalter oder -zustand der Kartusche.

Aus diesem Grund werden gemäß dem Stand der Technik die Fördermengen oder -zeiten für die Druckluft, nach denen eine Regeneration erfolgt, u. U. kleiner bemessen, als dies für eine Vielzahl der Betriebsbedingungen erforderlich ist. Andererseits wird eine Regenerationsphase u. U. mit einer hinreichenden Sicherheit bemessen, um auch für ausgefallene Betriebsdauern oder ein schlechtes Regenerationsvermögen der Kartusche eine den ordnungsgemäßen Betrieb der Druckluftaufbereitungsanlage gewährleistende Regeneration zu gewährleisten. Versagen derartige a-priori-Festlegungen der Bedingungen für die Bestimmung eines Zeitpunktes einer Durchführung einer Regeneration sowie der notwendigen Dauer der Regeneration, kann sich in Leitungen der Druckluftaufbereitungsanlage und den Verbrauchern Wasser bilden, welches unerwünscht ist und beispielsweise bei Betrieb in der Winterzeit zur Ausbildung von Eis führen kann. Derartige unerwünschte Betriebszustände können erfindungsgemäß vermieden werden.

Ein weiteres Problem stellt u. U. eine Verschmutzung der Kartusche, beispielsweise eines Filters oder des Granulats dar. Hier ist es beispielsweise möglich, dass es zu einer Verölung kommen kann, wenn die Druckluft ein Schmiermittel von einem Kolbenkompressor mit sich führt. Bei der folgenden Beschreibung von Ausgestaltungen und Vorteilen wird vorrangig auf Feuchtigkeitsprobleme Bezug genommen, wobei die Ausführungen entsprechend für Verschmutzungen gelten.

Zur Vermeidung der zuvor erläuterten Probleme schlägt die Erfindung vor, dass die Kartusche einen Sensor besitzt. Hierbei kann der Sensor unmittelbar der Kartusche zugeordnet sein, so dass sich dieser bereits bei Auslieferung der Kartusche in oder an dieser befindet. Ebenfalls möglich ist, dass die Kartusche selbst ohne den Sensor ausgeliefert wird und mit einer Montage der Kartusche an der Druckluftaufbereitungsanlage der Sensor der Kartusche zugeordnet wird, beispielsweise der Sensor in die Kartusche eingebracht wird.

Der Sensor dient einer Erfassung des Betriebszustands des Behandlungsmittels. Während gemäß den aus dem Stand der Technik bekannten Lösungen versucht wird, für alle erdenkbar möglichen Betriebsbedingungen die Veränderung des Betriebszustands des Behandlungsmittels a priori abzuschätzen, liegt auf Grundlage der Erfindung ein Ausgabewert des Sensors über den aktuellen, tatsächlichen Betriebszustand des Behandlungsmittels (oder zumindest eine Approximation desselben) vor. Beispielsweise nutzt die Erfindung eine Veränderung der physikalischen Eigenschaften des Behandlungsmittels je nach Betriebszustand. Bei einer derartigen Veränderung der physikalischen Eigenschaften des Behandlungsmittels handelt es sich insbesondere um eine Änderung
- der elektrischen Eigenschaften,
- des Volumens,
- des Gewichts,
- der Temperatur.

Über eine geeignete Auswertung kann dann von der über den Sensor erfassten physikalischen Eigenschaft ein Rückschluss auf den Betriebszustand des Behandlungsmittels erfolgen.

In weiterer Ausgestaltung der Erfindung erfasst der Sensor einen elektrischen Widerstand des Behandlungsmittels. Ein auf einem elektrischen Widerstand basierendes Messprinzip ist kostengünstig, robust und einfach auszuwerten, beispielsweise mittels einer Wheatstone'schen Brückenschaltung.

In alternativer oder kumulativer Ausgestaltung erfasst der Sensor eine Kapazität, einen Dielektrizitätsparameter und/oder eine Induktivität des Behandlungsmittels.

In besonderer Ausgestaltung der Erfindung weist der Sensor einen Kondensator mit beliebig geformten Kondensatorplatten auf. Zwischen den Kondensatorplatten ist das Behandlungsmittel angeordnet, welches somit als Dielektrikum wirkt. Die Erfindung hat erkannt, dass beispielsweise für die Ausbildung des Behandlungsmittels als Granulat dieses die Feuchtigkeit aufnimmt, wobei mit zunehmender Feuchtigkeit in dem Granulat die dielektrischen Eigenschaften verändert werden.

Ein besonders gut in eine Kartusche mit zylindrischem Querschnitt integrierbarer Sensor kann als Koaxialkondensator ausgebildet sein. Hierbei können beide Kondensatorplatten hohlzylinderförmig ausgebildet sein oder aber eine Kondensatorplatte als Hohlzylinder, während die andere "Kondensatorplatte" als Draht oder schlanker Zylinder ausgebildet ist. Neben der guten Integrierbarkeit eines derartigen Koaxialkondensators ergibt sich für eine Bauweise als Koaxialkondensator eine gute Abschirmung des elektrischen Felds nach außen, so dass Beeinträchtigungen infolge des elektrischen Felds von benachbarten Bauelementen erfindungsgemäß verringert oder gedämpft werden können.

Gemäß einem weiteren Vorschlag kann der Sensor eine Gewichtsänderung des Behandlungsmittels erfassen. Beispielsweise kann der Sensor als Piezo-Element oder als Dehnungsmessstreifen ausgebildet sein, dessen Dehnung von dem Gewicht des Granulats abhängig ist.

Für eine weitere Ausgestaltung der Erfindung kann über den Sensor eine Volumenänderung des Behandlungsmittels erfasst werden. Für eine Aufnahme von Flüssigkeit durch ein Granulat kann es beispielsweise zu einem "Aufquellen" des Granulats kommen, die über den Sensor erfasst werden kann. Für eine Ausgestaltung einer Kartusche gemäß der nicht vorveröffentlichten DE 10 2005 039 059 kann ein Granulat über einen federbelasteten Deckel vertikal nach unten zusammengepresst werden, so dass Volumenänderungen über Verschiebungen des Deckels und/oder Änderungen der Kräfteverhältnisse in der den Deckel beaufschlagenden Feder von dem Sensor erfasst werden können.

Eine weitere Ausgestaltung der Erfindung richtet besonderes Augenmerk auf eine Abfuhr der von dem Sensor erfassten Daten oder Signale. Hierzu schlägt die Erfindung vor, eine Übertragungseinrichtung vorzusehen, mit der die Daten oder Signale an benachbarte Bauelemente der Druckluftaufbereitungsanlage oder an weitere Bauelemente übertragen werden kann. Hierbei sind beliebige Übertragungseinrichtungen einsetzbar, beispielsweise
- Leistungsverbindungen, insbesondere mit einem Stecker oder einem Schleifkontakt,
- induktive Übertragungseinrichtungen
- kapazitive Übertragungseinrichtungen,
- auf einer Funkverbindung basierende Übertragungseinrichtungen oder
- eine RID-Technologie.

Weiterhin schlägt die Erfindung vor, eine Spannungsversorgung vorzusehen, für die geeignete Bauelemente in der Kartusche vorzusehen sind. Eine Spannungsversorgung kann beispielsweise durch einen kapazitiven Koppler, einen induktiven Koppler oder eine elektrische Leitung erfolgen. Elektrische Leistung kann auch in einer in der Kartusche mitgeführten Batterie gespeichert sein, die lediglich vor der Montage aufgeladen wird oder während des Betriebs der Kartusche ständig oder intermittierend nachgeladen wird.

ln weiterer Ausgestaltung der Erfindung ist der Sensor im Bereich des Luftauslasses angeordnet. Diese Ausgestaltung nutzt die Erkenntnis, dass im Bereich des Luftauslasses bereits eine hinreichende Reinigung oder Entfeuchtung der Luft erfolgt ist, so dass eine übermäßige Kontamination des Sensors mit Verunreinigungen und/oder Feuchtigkeit vermieden werden kann. Für den Fall, dass der Luftauslass radial innenliegend von der Kartusche angeordnet ist, ergibt sich bei einer derartigen Ausgestaltung zusätzlich eine verbesserte Abschirmung des elektrischen Felds des Sensors nach außen.

In alternativer Ausgestaltung ist der Sensor in einem Bereich maximaler Feuchteaufnahme oder Aufnahme von Verunreinigungen durch das Behandlungsmittel angeordnet. Hierbei handelt es sich insbesondere um
- den Eintrittsbereich der Luft in die Kartusche bzw. das Behandlungsmittel,
- mit maximalem Volumen durchströmte Bereiche oder
- Bereiche, in denen das Behandlungsmittel besonders lange der Luft ausgesetzt ist.

In einem Bereich maximaler Feuchtigkeitsaufnahme oder Aufnahme von Verunreinigungen ergibt sich eine besonders große Änderung der von dem Sensor erfassten physikalischen Eigenschaft, so dass durch diese erfindungsgemäße Ausgestaltung die Sensitivität des Sensors erhöht werden kann.

Gemäß einem weiteren Vorschlag der Erfindung ist der Sensor als Temperatursensor ausgebildet oder zusätzlich zu einem der vorgenannten Sensoren ein Temperatursensor vorgesehen. Dieser Ausgestaltung liegt die Erkenntnis zugrunde, dass die Aufnahme von Feuchtigkeit durch ein als Granulat ausgebildetes Behandlungsmittel ein exothermer Vorgang ist, so dass eine Feuchtigkeitsaufnahme mit einer Erwärmung des Granulats korrelieren kann. Aus diesem Grund ist mit einer Erfassung der Temperatur des Granulats eine Hilfsgröße gegeben, die Rückschlüsse über die aufgenommene Feuchtigkeit sowie die Schnelligkeit der Aufnahme der Feuchtigkeit zulässt. Umgekehrt kann in einem Regenerationsbetrieb für eine Abfuhr der Feuchtigkeit eine Verringerung der Temperatur festgestellt werden, so dass über die Überwachung der Temperatur auch das Regenerationsverhalten überwacht werden kann. Ebenfalls möglich ist eine Erfassung einer Temperatur zur Detektion von Betriebsbereichen zu hoher Temperaturen, in denen die Kartusche nicht mehr ordnungsgemäß arbeiten kann.

In weiterer Ausgestaltung der Erfindung besitzt die Kartusche eine Auswerteelektronik. Die Auswerteelektronik dient einer Verarbeitung oder Aufbereitung der Daten oder Signale des Sensors. Der Sensor besitzt u. U. lediglich ein geringes Ausgangssignal oder eine geringe Änderung des Ausgangssignals mit Änderung der physikalischen Eigenschaften des Behandlungsmittels. Diese geringen Größen können durch die Auswerteelektronik verstärkt werden, bevor u. U. eine Übergabe der Daten oder des Signals an weitere Steuereinrichtungen o. ä. erfolgt. Hierdurch kann ein Signal-Rausch-Abstand vergrößert werden.

In besonderer Ausgestaltung einer derartigen Auswerteelektronik ist der mit einem Kondensator ausgestattete Sensor in einen Schwingkreis integriert. In einem derartigen Schwingkreis hängt dann die Eigenkreisfrequenz des Schwingkreises von der Kapazität des Kondensators ab. Hierdurch ist eine einfache, kostengünstige und genaue Erfassungsmöglichkeit der Änderung der physikalischen Eigenschaften des Behandlungsmittels unter Nutzung der Frequenz oder einer Systemantwort des Schwingkreises gegeben.

Eine weitere Lösung der der Erfindung zugrunde liegenden Aufgabe ergibt sich gemäß den Merkmalen des Anspruchs 16. Diese Lösung betrifft eine Druckluftaufbereitungsanlage für ein Kraftfahrzeug oder Nutzfahrzeug, in der eine der vorgenannten Kartuschen zur Luftaufbereitung eingesetzt ist. Die Druckluftaufbereitungsanlage besitzt einen Luftaufbereitungskreislauf sowie einen Regenerationskreislauf. Weiterhin ist eine Steuereinrichtung (oder Regeleinrichtung) vorgesehen, in der betriebsabhängig eine Aktivierung und Deaktivierung des Regenerationskreislaufs erfolgen kann. Eine derartige Aktivierung und Deaktivierung erfolgt erfindungsgemäß nicht nach vorbestimmten Zeiträumen oder Fördermengen. Vielmehr ist in der Druckluftaufbereitungsanlage eine Empfangseinrichtung vorgesehen, über die Daten oder Signale von der Übertragungseinrichtung der Kartusche empfangen werden können. Somit können von der Druckluftaufbereitungsanlage die über den tatsächlichen Zustand der Kartusche gewonnenen Daten zur Aktivierung und Deaktivierung des Regenerationskreislaufs und des Luftaufbereitungskreislaufs genutzt werden.

In weiterer Ausgestaltung der Erfindung ist in der Druckluftaufbereitungsanlage, u. U. zusätzlich zu derartigen Elementen in der Kartusche, eine Auswerteelektronik und/oder eine Steuereinrichtung vorgesehen. Die Auswerteelektronik oder Steuereinrichtung dient einer Auswertung der empfangenen Daten oder Signale. Hierbei kann eine beliebige Auswertung erfolgen, beispielsweise die Überwachung von Absolutwerten, zeitlichen Änderungen, Frequenzen oder Frequenzanteilen.

Eine weitere Lösung der Erfindung ist durch ein Verfahren gemäß den Merkmalen des Anspruchs 18 gegeben. Demgemäß überwacht die Steuereinrichtung einen Messwert des Sensors (der ggf. über die Auswerteelektronik weiterverarbeitet ist) oder eine Änderung des Messwertes. Bei Überschreiten eines Schwellwerts des Messwerts oder der Änderung desselben wird dann erfindungsgemäß der Regenerationsbetrieb eingeleitet. Hierbei kann der Schwellwert konstant sein, sich über die Betriebsdauer ändern oder beispielsweise von weiteren Betriebsparametern abhängig sein oder über ein Kennfeld abgelegt sein. Insbesondere wird ein Schwellwert festgelegt, der mit der maximal in der Kartusche bzw. dem Behandlungsmittel gewünschten Feuchtigkeit korreliert, wobei mit Überschreiten dieses Schwellwerts die Regeneration eingeleitet wird. Entsprechend ist möglich, dass nach einem Abfallen des Messwerts unter einen anderen Schwellwert über die Steuereinrichtung der Regenerationsbetrieb beendet wird, so dass zuverlässig dafür Sorge getragen ist, dass eine ausreichende Regeneration erfolgt ist.

In weiterer Ausgestaltung der Erfindung wird aus einem Messwert des Sensors oder einem Satz von derartigen Messwerten oder einer Änderung desselben eine Information über die Betriebsfähigkeit der Kartusche ermittelt. Unter Betriebsfähigkeit wird in diesem Zusammenhang eine Aussage darüber verstanden, ob die Kartusche für einen weiteren Betrieb geeignet ist oder u. U. ausgewechselt werden muss, insbesondere sofort oder nach einem vorgegebenen Intervall. Beispielsweise kann es sich bei einem Satz von Messwerten um
- eine Entwicklung der Feuchte nach einem erfolgten Regenerationsbetrieb unter definierten Betriebsbedingungen oder
- Regenerationsdauern
handeln, wobei ein Anstieg der Feuchtigkeit nach erfolgtem Regenerationsbetrieb oder eine zu- oder abnehmende Regenerationsdauer die Notwendigkeit eines Austauschs der Kartusche indizieren kann. Alternativ oder ergänzend kann eine zeitliche Entwicklung von Messwerten ausgewertet werden.

Einer weiteren Ausgestaltung der Erfindung liegt die Erkenntnis zugrunde, dass mit zunehmendem Betrieb der Kartusche das Behandlungsmittel zunehmend verunreinigt wird, beispielsweise mit Öl. Als Folge nimmt u. U. das Absorptionsvermögen des Behandlungsmittels ab. Dies kann in einem schnelleren Anstieg des Feuchtigkeitsgehalts des Behandlungsmittels während des Luftaufbereitungsbetriebs resultieren, so dass bei Auswertung der Änderungsgeschwindigkeit des Feuchtigkeitsgehalts eine Information über die Betriebsfähigkeit der Kartusche gewonnen werden kann. Hierbei kann u. U. auch ein weiterer Betriebsparameter oder Umgebungsparameter berücksichtigt werden. Insbesondere steigt die Änderungsgeschwindigkeit der Feuchtigkeit des Behandlungsmittels mit zunehmender Feuchtigkeit der der Druckluftaufbereitungsanlage zugeführten Luft, so dass die Feuchtigkeit oder eine Umgebungstemperatur zusätzliche Berücksichtigung finden kann zur Erhöhung der Genauigkeit der Ergebnisse.

In ergänzender Ausgestaltung der Erfindung kann bei einer Ermittlung einer mangelhaften Betriebsfähigkeit ein Informationssignal erzeugt werden. Dieses Informationssignal wird für den Fahrer oder ein Wartungspersonal erkennbar gemacht. Bei einem derartigen Informationssignal kann es sich um eine optische Anzeige, eine akustische Anzeige, eine Textinformation auf einem Display, ein Messsignal, Daten o. ä. handeln. Für den Fahrer können die vorgenannten Informationssignale während des Betriebs des Kraftfahrzeugs angezeigt werden. Ebenfalls möglich ist, dass die Informationen einem Wartungspersonal bereitgestellt werden oder von diesem ausgelesen werden.

Für eine weitere erfindungsgemäße Kartusche ist in der Kartusche eine Speichereinheit vorgesehen. In der Speichereinheit können einerseits bauteilabhängige Daten wie ein Produktionszyklus, physikalische Eigenschaften der Kartusche bei deren Auslieferung o. ä. gespeichert werden. Andererseits können von dem Sensor erzeugte Daten oder Signale in der Speichereinheit zwischengespeichert werden und zu einem späteren Zeitpunkt an benachbarte Bauelemente übergeben werden und/oder ausgelesen werden. U. U. kann durch Abspeicherung derartiger Werte toleranzbedingten Änderungen der physikalischen Eigenschaften Rechnung getragen werden, die sich im Produktionszyklus ergeben.

Eine weitere alternative oder kumulative Lösung der der Erfindung zugrunde liegenden Aufgabe ist gegeben durch eine Druckluftaufbereitungsanlage, in der auf der Ausgangsseite der Kartusche ein Sensor mit der durch die Kartusche geleiteten Luft beaufschlagt ist. Demgemäß erfolgt eine Messung einer Feuchtigkeit nicht (ausschließlich) in dem Behandlungsmittel, sondern vielmehr wird "mittelbar" über das Ausgangsergebnis der Kartusche auf den Zustand der Kartusche selbst rückgeschlossen. Arbeitet die Kartusche nicht mehr ordnungsgemäß, so hat dies zur Folge, dass die die Kartusche verlassende Luft einen unerwünscht hohen Feuchtigkeitsgehalt besitzt. Umgekehrt kann somit über die Erfassung der Luft auf der Ausgangsseite der Kartusche ein Rückschluss auf den Betriebszustand der Kartusche erfolgen und ggf. eine Regenerationsphase eingeleitet werden.

Weitere Überlegungen der Erfindung haben gezeigt, dass die Qualität der Luft auf der Ausgangsseite der Kartusche u. U. von der der Kartusche eingangsseitig zugeführten Luft abhängig sein kann. Bei gleicher Trocknungswirkung der Kartusche hat eine Luft mit erhöhter Feuchtigkeit auf der Eingangsseite der Kartusche zur Folge, dass sich ausgangsseitig die Feuchte in der Luft erhöht. Um hierdurch bedingte Überwachungsfehler zu vermeiden, schlägt die Erfindung vor, dass auf der Eingangsseite der Kartusche ein erster Sensor angeordnet ist sowie auf der Ausgangsseite der Kartusche ein zweiter Sensor vorgesehen ist. Über eine Beziehung eines Signals oder von Daten des ersten Sensors und eines Signals oder Daten des zweiten Sensors (oder Änderungen der Signale oder Daten) erfolgt dann eine Beurteilung der Betriebsfähigkeit der Kartusche oder einer Notwendigkeit eines Regenerationsbetriebs.

Entsprechend möglich ist eine Überwachung der Regenerationsphase, für die die Eingangs- und Ausgangsseiten für die Auswertung vertauscht werden müssen. Auf diese Weise können die zuvor erwähnten Nachteile infolge einer Veränderung der Umgebungsbedingungen und der physikalischen Eigenschaften der Luft auf der Eingangsseite der Kartusche (oder der Ausgangsseite für den Regenerationsbetrieb) ausgeschlossen werden.

Die genannten Sensoren können u. U. auch räumlich beabstandet von der Kartusche angeordnet sein, beispielsweise
- in einem Umgebungsbereich der Kartusche,
- einer Zu- oder Ableitung oder
- einem Einströmbereich der ausgangsseitigen Luft in einen Behälter,
sofern dafür Sorge getragen ist, dass physikalischen Eigenschaften der Luft im Bereich des Sensors denen der aktuell der Kartusche zu- und abgeführten Luft entsprechen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Vertikalschnitt durch eine Ausführungsform einer austauschbaren Kartusche gemäß dem nicht vorveröffentlichten Stand der Technik der Anmelderin mit dem amtlichen Aktenzeichen DE 10 2005 039 059.5-43.
- **Fig. 2**: zeigt eine schematische Darstellung einer erfindungsgemäßen Kartusche mit einem Sensor zur Erfassung eines Betriebszustands.
- **Fig. 3**: zeigt eine schematische Darstellung einer alternativen Ausgestaltungsform einer Kartusche mit einem Sensor.
- **Fig. 4**: zeigt ein schematisches Blockschaltbild für eine Druckluftaufbereitungsanlage mit einem in eine Kartusche integrierten Sensor und mit einem Regenerationskreislauf sowie einem Luftaufbereitungskreislauf.
- **Fig. 5**: zeigt ein schematisches Blockschaltbild für eine Druckluftaufbereitungsanlage mit einem eingangsseitig einer Kartusche sowie einem ausgangsseitig einer Kartusche angeordneten Sensor.
- **Fig. 6**: zeigt ein schematisches Blockschaltbild zur Signalverarbeitung von einem Sensor in einer Kartusche bis hin zu einer Signaleinrichtung für einen Fahrer oder ein Wartungspersonal.

### FIGURENBESCHREIBUNG

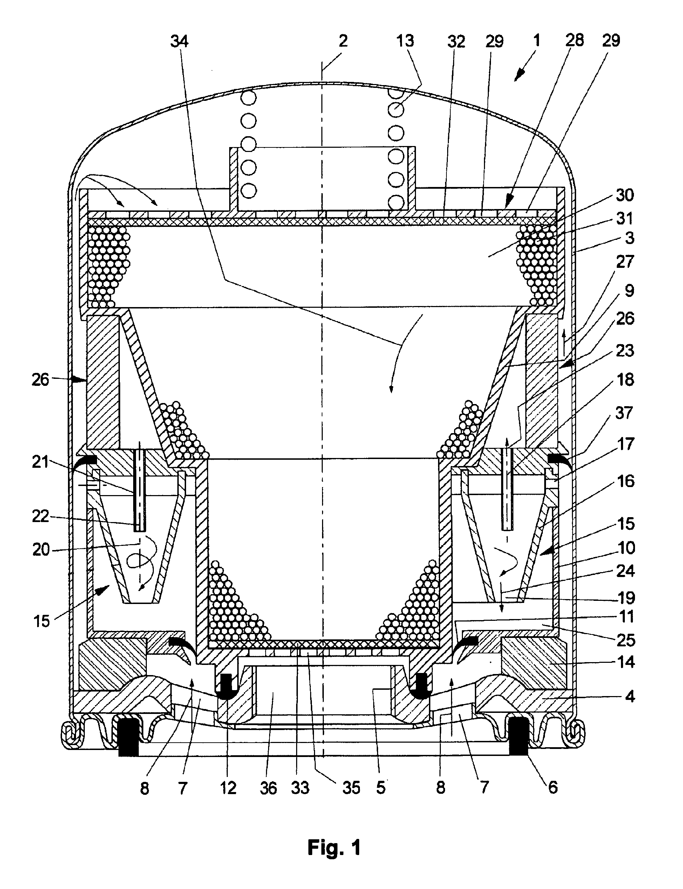

In **Fig. 1** ist eine erste Ausführungsform einer Kartusche 1 wiedergegeben. Die Kartusche 1 weist eine vertikal ausgerichtete Achse 2 auf. Äußerer Bestandteil der Kartusche 1 ist ein Gehäuse 3, welches ebenfalls die Achse 2 besitzt. Die Kartusche 1 ist weitgehend rotationssymmetrisch aufgebaut. Sie weist in ihrem unteren Bereich eine Schraubplatte 4 auf, die zum Anschluss an ein nicht dargestelltes Sockelteil eines benachbarten Bauelements einer Druckluftanlage ausgebildet ist. Zu diesem Zweck besitzt die Schraubplatte 4 ein Gewinde 5.

Sie trägt auf der dem Sockelteil zugekehrten Seite eine Dichtung 6. Das Gehäuse 3 ist mit der Schraubplatte 4 dauerhaft verbunden, beispielsweise durch eine Umbördelung, Verschweißung oder dergleichen. Die Schraubplatte weist eine Reihe von Lufteinlässen 7 auf, durch die die zu reinigende Druckluft gemäß Pfeil 8 in die Kartusche 1 einströmt.

Im Innenraum des Gehäuses 3 befindet sich ein Einsatz 9, der, wie dargestellt, gestuft ausgebildet ist und verschiedene Unterbringungsräume für Behandlungsmittel einschließlich Filtermittel sowie weitere Elemente bereitstellt. Dem Einsatz 9 ist ein Tragkäfig 10 zugeordnet, der etwa im Mittelbereich des Einsatzes 9 an diesen anschließt und sich gehäuseartig nach unten erstreckt. Der Tragkäfig 10 trägt an seinem unteren Ende eine Dichtlippe 11. Der Einsatz 9 weist an seinem unteren Ende eine Dichtung 12 auf, mit der er sich dichtend an der Schraubplatte 4 abstützt. Eine vorgespannte Feder 13 ist zwischen Gehäuse 3 und einem Deckel 28 des Einsatzes 9 vorgesehen.

Zwischen dem Tragkäfig 10 und der Schraubplatte 4 ist als ein erstes Behandlungsmittel ein grobes Vorfilter 14 eingeschaltet und angeordnet, welches als Gewebefilter ausgebildet sein kann. Die zu reinigende Druckluft wird, wie dargestellt, zunächst durch dieses Vorfilter 14 hindurch geleitet, wobei größere feste Partikel abgeschieden bzw. zurückgehalten werden.

Zwischen dem Einsatz 9 und dem Tragkäfig 10 sind als ein zweites Behandlungsmittel über den Umfang verteilt eine Mehrzahl Zyklone 15 untergebracht. Jeder Zyklon 15 besitzt eine sich kegelförmig verjüngende Wandung 16 mit einem Einlass 17 im oberen Bereich, einem ersten Auslass 18 für die gereinigte Druckluft und einem zweiten Auslass 19 für die festen und/oder flüssigen Verunreinigungen in der Druckluft. Die Zyklone 15 sind selbst mit vertikal ausgerichteten Achsen 20 angeordnet. Der erste Auslass 18 ist in Form eines Rohrs 21 vorgesehen, welches sich von oben her durch den Tragkäfig 10 hindurch nach unten in das Innere des Zyklons 15 erstreckt. Es ist erkennbar, dass das freie Ende 22 des Rohrs 21, durch welches die gereinigte Druckluft gemäß Pfeil 23 nach oben strömt, tiefer angeordnet ist als der Einlass 17. Das freie Ende 22 befindet sich also im Mittelbereich der axialen Erstreckung des Zyklons 15, also in einem Bereich, in welchem es einerseits noch einen hinreichenden Abstand zu der Wandung 16 besitzt und andererseits die Sekundärströmung wirkungsvoll erfasst. Dies zielt darauf ab, auf keinen Fall feste und/oder flüssige Verunreinigungen über den ersten Auslass 18 ungewollt abzuführen. Der zweite Auslass 19, der am unteren Ende der Wandung 16 des Zyklons 15 gebildet ist, besitzt einen freien Durchtrittsquerschnitt, der größer ausgebildet ist, als der freie Durchtrittsquerschnitt des Rohrs 21. Auf diese Weise wird sich die Strömung der verunreinigten Druckluft, die über den Einlass 17 in das Innere des Zyklons eingeführt wird, schraubenlinienförmig an der Wandung 16 nach unten bewegen, so dass in dieser Primärströmung die festen und/oder flüssigen Verunreinigungen gemäß Pfeil 24 nach unten geführt werden und in einen Sammelraum 25 übertreten, in welchem sie temporär aufgenommen werden. Im axialen Mittelbereich um die Achse 20 herum bildet sich eine Luftströmung als Sekundärströmung aus, die entgegengesetzt, also nach oben gerichtet ist. Die gereinigte Luft wird gemäß Pfeil 23 einem Koaleszenzfilter 26 als drittem Behandlungsmittel zugeführt. Dieser Koaleszenzfilter 26 hat die Wirkung, feine Bestandteile zu größeren Partikeln zusammenzufügen und abzuscheiden, so dass die Druckluft nach dem Durchströmen des Koaleszenzfilters 26 weiter gereinigt ist. Die Druckluft strömt dann auf ihrem Strömungspfad gemäß Pfeil 27 weiter nach oben, wobei sich im Bereich einer kuppelförmigen Ausbildung des Gehäuses 3 die Strömungsrichtung umkehrt. Es ist dort der Deckel 28 des Einsatzes 9 mit Durchbrechungen 29 vorgesehen. Der Deckel 28 ist gegenüber dem Einsatz 9 frei beweglich. Der Einsatz 9 weist einen Innenraum 30 auf, der als viertes Behandlungsmittel mit einem Trockenmittel 31, beispielsweise in Form eines Granulats, gefüllt ist. Der Deckel 28 stützt sich über das Trockenmittel 31 ab, so dass sich die Kraft der Feder 13 auch auf den Einsatz 9 und damit die Dichtung 12 auswirkt. Unter dem Deckel 28 kann eine Filzscheibe 32 angeordnet sein, die das Trockenmittel 31 vor einem Austritt durch die Durchbrechungen 29 schützt. Eine weitere Filzscheibe 33 befindet sich am unteren Ende des Innenraums 30. Damit ist sichergestellt, dass die gereinigte Druckluft, die in der Regel nur noch Feuchtigkeit enthält, gemäß Pfeil 34 das Trockenmittel 31 bzw. den Innenraum 30 von oben nach unten durchströmt. Die Druckluft durchströmt damit auch die Filzscheibe 33 und gelangt über Durchbrechungen 35 im Einsatz 9 durch einen Luftauslass 36 der Schraubplatte 4 hindurch in den nicht dargestellten Sockelteil, über den die gereinigte Druckluft dann über entsprechende Leitungsverbindungen mit den üblichen darin angeordneten Elementen, beispielsweise Mehrkreisschutzventile, Überströmventile, Druckbegrenzungsventile usw., auf die einzelnen Kreise und die dort angeschlossenen Ventile und Anlagenteile verteilt wird.

Um den eben beschriebenen Strömungsweg sicherzustellen, besitzt der Tragkäfig 10 eine Dichtlippe 37, die so ausgebildet und angeordnet ist, dass sie nur in einer Regenerationsphase überströmt werden kann und so eine Aufteilung des Strömungspfads durch den Vorfilter 14 und den Zyklon 15 mit dem Sammelraum 25 erfolgt.

Der im Wesentlichen bisher beschriebene Strömungspfad ist derjenige, der während der Lastlaufphase eingenommen wird. Es versteht sich, dass in der Regenerationsphase, die während der Leerlaufphase stattfindet, die entsprechende umgekehrte Durchströmung eintritt, wobei abgeschiedene Verunreinigungen zumindest teilweise in die Atmosphäre überführt werden können. Dies gilt sowohl für Verunreinigungen am Vorfilter 14 wie auch für feste und/oder flüssige Verunreinigungen, die sich im Sammelraum 25 angesammelt haben. Bei dieser umgekehrten Durchströmung der Kartusche 1 werden also auch die Zyklone 15 durchströmt. Auch abgeschiedenes partikelförmiges Material des Koaleszenzfilters 26 wird auf diese Art und Weise unter Umgehung der Zyklone 15 zumindest teilweise in die Atmosphäre abgeführt. Aufgenommene Feuchtigkeit des Trockenmittels 31 wird ebenfalls zumindest teilweise in die Atmosphäre abgeführt. Bei der Ausführungsform gemäß Fig. 1 kann der Vorfilter 14 entfallen, so dass die verunreinigte Druckluft zuerst durch die Zyklone 15 fließt.

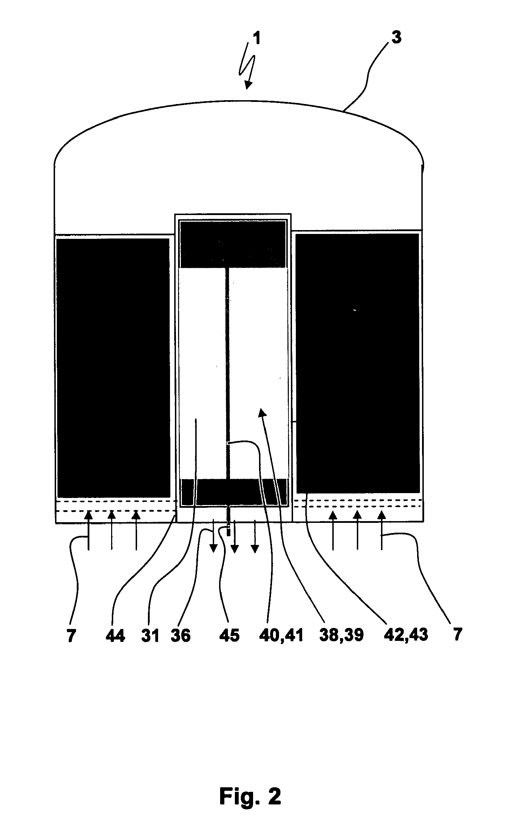

**Fig. 2** zeigt eine schematische Darstellung einer Kartusche 1, bei der es sich beispielsweise
- um eine Kartusche gemäß Fig. 1,
- eine andere in der nicht vorveröffentlichten Patentanmeldung DE 10 2005 039 059.5-43 dargestellte Ausführungsform einer Kartusche oder
- eine Kartusche gemäß einer der Druckschriften DE 103 13 575 A1, DE 103 29 401 A1 oder WO 01/26783 A1 oder
- eine beliebige andere Kartusche
handelt. In der Kartusche 1, insbesondere in dem Strömungspfad zwischen dem Lufteinlass 7 und dem Luftauslass 36, ist ein Sensor 38 angeordnet. Beispielsweise kann der Sensor 38 im Bereich der zuvor genannten Behandlungsmittel, also im Bereich der Unterbringungsräume, der Filtermittel, des groben Vorfilters 14, der Zyklone 15 des Sammelraums 25, dem Koaleszenzfilter 26 und/oder des Trockenmittels 31, angeordnet sein. Für das in Fig. 2 dargestellte Ausführungsbeispiel handelt es sich bei dem Sensor 38 um einen Kondensator 39, der hier als Koaxialkondensator ausgebildet ist mit einem eine "Kondensatorplatte" 40 bildenden Draht 41 sowie einer durch einen Hohlzylinder 42 gebildeten Kondensatorplatte 43. Die Kondensatorplatten 40, 43 sind koaxial zur Achse 2 angeordnet und schließen ein Behandlungsmittel, beispielsweise das Trockenmittel 31, ein. Über geeignete Leitungen 44, 45 sind die Kondensatorplatten 40, 43 mit weiteren elektrischen Bauelementen verbunden, wie nachstehend noch näher erläutert wird.

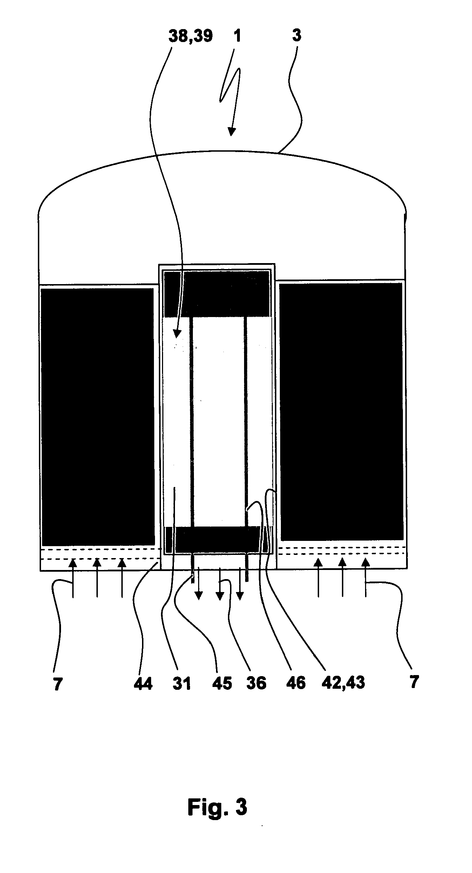

**Fig. 3** zeigt eine alternative Ausgestaltung, für die bei ansonsten Fig. 2 entsprechender Ausgestaltung die innenliegende Kondensatorplatte 40 nicht als Draht 41, sondern entweder mit zwei Drähten oder als Hohlzylinder 46 ausgebildet ist.

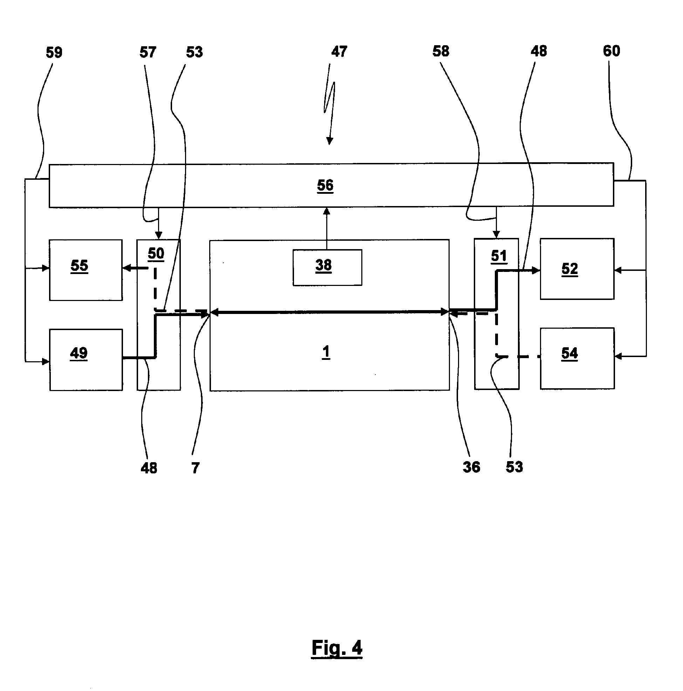

**Fig. 4** zeigt einen Teil einer Druckluftaufbereitungsanlage 47 in schematischer Darstellung. In der Darstellung sind die Wege der Druckluft mit vergrößerter Strichstärke dargestellt, während elektrische Steuersignale oder Regelungssignale sowie elektrische Signale oder Messsignale mit Pfeilen mit verringerter Strichstärke angedeutet sind. In dem mit durchgezogener Linie dargestellten Regenerationskreislauf 48 wird Luft aus der Umgebung oder einem Reservoir über einen Kompressor 49 verdichtet und über eine Ventilbaugruppe 50 dem Lufteinlass 7 der Kartusche 1 zugeführt. Die Luft tritt im Bereich des Luftauslasses 36 aus der Kartusche 1 nach einem Kontakt mit dem Behandlungsmittel wieder aus und gelangt in dem Druckluftaufbereitungskreislauf 48 über eine Ventilbaugruppe 51 zu einem Verbraucher 52 oder Druckluftbehälter. Durch geeignete Umschaltung der Ventilbaugruppen 50, 51 kann von dem mit durchgezogener Linie dargestellten Druckluftaufbereitungskreislauf 48 auf den gestrichelt dargestellten Regenerationskreislauf 53 umgeschaltet werden. In dem Regenerationskreislauf 53 gelangt Luft von dem Verbraucher 52 oder einer weiteren Quelle 54 über die Ventilbaugruppe 51 zu dem "Luftauslass" 36. Die Luft wird in umgekehrter Richtung zu der Förderrichtung in dem Druckluftaufbereitungskreislauf 48 durch die Kartusche 1 bei Wirkkontakt mit dem Behandlungsmittel zu dem "Lufteinlass" 7 gefördert und gelangt von diesem über die Ventilbaugruppe 50 zu einer Drucksenke 55 oder in die Umgebung. In der Kartusche ist in den zuvor spezifizierten Bereichen des Behandlungsmittels der Sensor 38 angeordnet.

Die Druckluftaufbereitungsanlage 47 besitzt eine Steuer- oder Regelungseinrichtung (im Folgenden Steuereinrichtung 56). Der Steuereinrichtung 56 werden die Signale des Sensors 38, ggf. unter Zwischenverarbeitung, Verstärkung, Umwandlung und/oder Übertragung, zugeführt. Über Steuersignale 57, 58 wirkt die Steuereinrichtung 56 auf die Ventilbaugruppen 50, 51 ein, um eine Umschaltung von einem Druckluftaufbereitungskreislauf 48 zu einem Regenerationskreislauf 53 vorzunehmen sowie eine Rückschaltung von dem Regenerationskreislauf 53 auf den Druckluftaufbereitungskreislauf 48 zu bewirken. Die Umschaltzeitpunkte und Bedingungen werden in der Steuereinrichtung 56 unter Berücksichtigung des Signals des Sensors 38 und geeignete Bewertungsalgorithmen ermittelt. Weiterhin steuert oder regelt die Steuereinrichtung 56 über Steuersignale 59, 60 die Tätigkeit des Kompressors 49, der Drucksenke 55, des Verbrauchers 52 sowie der weiteren Quelle 54.

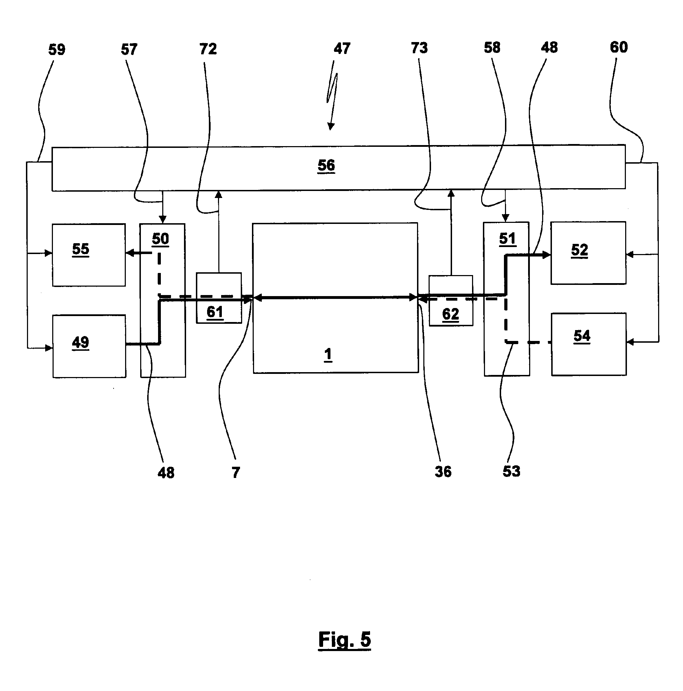

**Fig. 5** zeigt, ebenfalls in schematischer Darstellung, eine alternative Ausgestaltung einer Druckluftaufbereitungsanlage 47. Bei ansonsten im Wesentlichen Fig. 4 entsprechender Ausgestaltung ist für das in Fig. 5 dargestellte Ausführungsbeispiel der Sensor nicht in der Kartusche 1 angeordnet. Vielmehr besitzt die Druckluftaufbereitungsanlage 47 eingangsseitig einen ersten Sensor 61 sowie ausgangsseitig einen zweiten Sensor 62. Gemäß Fig. 5 sind die Sensoren 61, 62 jeweils zwischen Kartusche 1 und Ventilbaugruppe 50, 51 zwischengeschaltet, wobei in Abwandlung die Sensoren 61, 62 an beliebiger Stelle im Bereich des Regenerationskreislaufs 53 und/oder Druckluftaufbereitungskreislauf 48 angeordnet sein können. Signale 72, 73 der Sensoren 61, 62 werden der Steuereinrichtung 56 zugeführt, die über geeignete Funktionen, Algorithmen oder Schwellwerte Rückschlüsse über den Zustand eines Behandlungsmittels in der Kartusche 1 zieht.

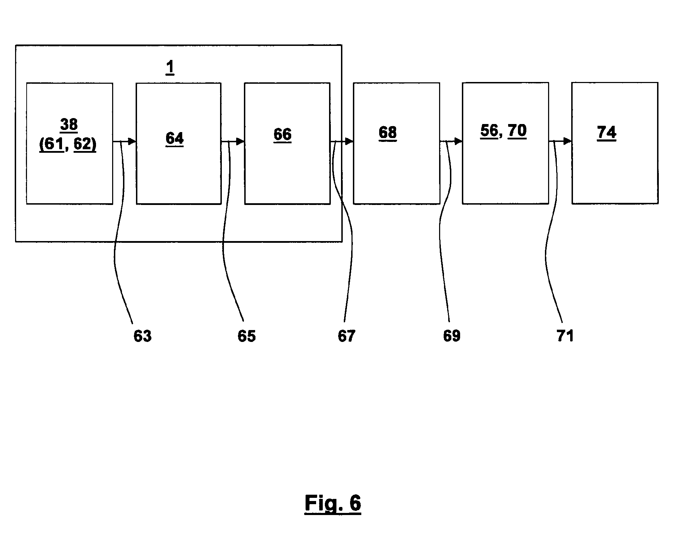

Für die in **Fig. 6** schematisch dargestellte Signalkette erfolgt eine Verarbeitung eines Signals 63 eines Sensors 38 (61, 62) über eine Auswerteelektronik 64. Bei der Auswerteelektronik 64 handelt es sich vorzugsweise um eine CPU mit geeigneten Auswertealgorithmen, eine elektrische Verstärkung, einen elektrischen Auswertekreis wie beispielsweise eine Wheatstone'sche Brücke. Das verstärkte Signal 65 wird einer Übertragungseinrichtung 66 zugeführt. Von der Übertragungseinrichtung 66 wird ein Signal 67 an eine Empfangseinrichtung 68 übertragen. Bei dem zwischen Übertragungseinrichtung 66 und Empfangseinrichtung 68 übertragenen Signal kann es sich um ein in einer elektrischen Leitung geführtes Signal handeln, ein magnetisches Signal, ein induktives Signal, ein Radiofrequenz-Signal o. ä. Die Empfangseinrichtung 68 überträgt ein entsprechendes Signal 69 an die Steuereinrichtung 56 und/oder eine Auswerteelektronik 70, in der eine Beurteilung des Signals 69 dahingehend erfolgt, ob eine Aktivierung oder Deaktivierung eines Regenerationskreislaufs 53 oder Druckluftaufbereitungskreislaufs 48 erforderlich ist und/oder eine mangelhafte Betriebsfähigkeit der Kartusche vorliegt, so dass ein Austausch der Kartusche erfolgen soll. Ggf. kann ein Signal 71, welches einen erforderlichen Austausch der Kartusche indiziert, an eine Informationseinrichtung 74 für einen Fahrer oder ein Wartungspersonal übergeben werden.

Für das in Fig. 6 dargestellte Ausführungsbeispiel sind die Bauelemente Sensor 38 (61, 62), Auswerteelektronik 64 und Übertragungseinrichtung 66 in der Kartusche angeordnet, während die übrigen in Fig. 6 dargestellten Bauelemente außerhalb der Kartusche in anderen Teilbereichen der Druckluftaufbereitungsanlage oder des Kraftfahrzeugs angeordnet sind.

Selbstverständlich ist eine abweichende Zuordnung der Bauelemente zu der Kartusche 1, der Druckluftaufbereitungsanlage 47 und dem Kraftfahrzeug möglich.

Möglich ist ebenfalls der Einsatz einer Empfangseinrichtung 68, die neben dem Empfang des Signals 67 des Sensors 38 (61, 62) einem Empfang weiterer Signale, beispielsweise eines Reifensensors, dient.

### BEZUGSZEICHENLISTE

| | | | |
|---|---|---|---|
| 1 | Kartusche | 31 | Trockenmittel |
| 2 | Achse | 32 | Filzscheibe |
| 3 | Gehäuse | 33 | Filzscheibe |
| 4 | Schraubplatte | 34 | Pfeil |
| 5 | Gewinde | 35 | Durchbrechung |
| 6 | Dichtung | 36 | Luftauslass |
| 7 | Lufteinlass | 37 | Dichtlippe |
| 8 | Pfeil | 38 | Sensor |
| 9 | Einsatz | 39 | Kondensator |
| 10 | Tragkäfig | 40 | Kondensatorplatte |
| 11 | Dichtlippe | 41 | Draht |
| 12 | Dichtung | 42 | Hohlzylinder |
| 13 | Feder | 43 | Kondensatorplatte |
| 14 | grober Vorfilter | 44 | Leitung |
| 15 | Zyklon | 45 | Leitung |
| 16 | Wandung | 46 | Hohlzylinder |
| 17 | Einlass | 47 | Druckluftaufbereitungsanlage |
| 18 | erster Auslass | 48 | Druckluftaufbereitungskreislauf |
| 19 | zweiter Auslass | 49 | Kompressor |
| 20 | Achse | 50 | Ventilbaugruppe |
| 21 | Rohr | 51 | Ventilbaugruppe |
| 22 | Ende | 52 | Verbraucher |
| 23 | Pfeil | 53 | Regenerationskreislauf |
| 24 | Pfeil | 54 | weitere Quelle |
| 25 | Sammelraum | 55 | Drucksenke |
| 26 | Koaleszenzfilter | 56 | Steuereinrichtung |
| 27 | Pfeil | 57 | Steuersignal |
| 28 | Deckel | 58 | Steuersignal |
| 29 | Durchbrechung | 59 | Steuersignal |
| 30 | Innenraum | 60 | Steuersignal |
| 61 | erster Sensor | | |
| 62 | zweiter Sensor | | |
| 63 | Signal | | |
| 64 | Auswerteelektronik | | |
| 65 | verstärktes Signal | | |
| 66 | Übertragungseinrichtung | | |
| 67 | Signal | | |
| 68 | Empfangseinrichtung | | |
| 69 | Signal | | |
| 70 | Auswerteelektronik | | |
| 71 | Signal | | |
| 72 | Signal | | |
| 73 | Signal | | |
| 74 | Informationseinrichtung | | |

## Patentansprüche

1. Kartusche (1) zum Reinigen und/oder Trocknen von Druckluft in Druckluftaufbereitungsanlagen (47) von Kraftfahrzeugen, Nutzfahrzeugen, Anhängern oder Zugfahrzeugen mit einem Behandlungsmittel (Vorfilter 14; Zyklon 15; Koaleszenzfilter 26; Trockenmittel 31), **dadurch gekennzeichnet, dass** die Kartusche (1) einen Sensor (38) zur Erfassung eines Betriebszustands des Behandlungsmittels (Vorfilter 14; Zyklon 15; Koaleszenzfilter 26; Trockenmittel 31) besitzt.

2. Kartusche (1) nach Anspruch 1, **dadurch gekennzeichnet, dass** der Sensor (38) einen elektrischen Widerstand des Behandlungsmittels (Vorfilter 14; Zyklon 15; Koaleszenzfilter 26; Trockenmittel 31) erfasst.

3. Kartusche (1) nach Anspruch 1 oder Anspruch 2, **dadurch gekennzeichnet, dass** der Sensor (38) eine Kapazität, eine Dielektrizitäts-Parameter und/oder eine Induktivität des Behandlungsmittels (Vorfilter 14; Zyklon 15; Koaleszenzfilter 26; Trockenmittel 31) erfasst.

4. Kartusche (1) nach Anspruch 3, **dadurch gekennzeichnet, dass** der Sensor (38) einen Kondensator (39) umfasst mit Kondensatorplatten (40, 43), wobei zwischen den Kondensatorplatten (40, 43) das Behandlungsmittel (Vorfilter 14; Zyklon 15; Koaleszenzfilter 26; Trockenmittel 31) als Dielektrikum angeordnet ist.

5. Kartusche (1) nach Anspruch 4, **dadurch gekennzeichnet, dass** der Kondensator (39) als Koaxialkondensator ausgebildet ist.

6. Kartusche (1) nach einem der vorhergehenden Ansprüche, **dadurch gekennzeichnet, dass** der Sensor (38) eine Gewichtsänderung des Behandlungsmittels (Vorfilter 14; Zyklon 15; Koaleszenzfilter 26; Trockenmittel 31) erfasst.

7. Kartusche (1) nach einem der vorhergehenden Ansprüche, **dadurch gekennzeichnet, dass** der Sensor (38) eine Volumenänderung des Behandlungsmittels (Vorfilter 14; Zyklon 15; Koaleszenzfilter 26; Trockenmittel 31) erfasst.

8. Kartusche (1) nach einem der vorhergehenden Ansprüche, **dadurch gekennzeichnet, dass** der Sensor (38) eine Temperatur des Behandlungsmittels (Vorfilter 14; Zyklon 15; Koaleszenzfilter 26; Trockenmittel 31) erfasst.

9. Kartusche (1) nach einem der vorhergehenden Ansprüche, **dadurch gekennzeichnet, dass** eine Übertragungseinrichtung (66) vorgesehen ist, mittels welcher von dem Sensor (38) erfasste Daten oder Signale (63; 65) an andere Bauelemente übertragbar sind.

10. Kartusche (1) nach einem der vorhergehenden Ansprüche, **dadurch gekennzeichnet, dass** eine Spannungsversorgung vorgesehen ist.

11. Kartusche (1) nach einem der vorhergehenden Ansprüche, **dadurch gekennzeichnet, dass** der Sensor (38) im Bereich eines Luftauslasses (36) angeordnet ist.

12. Kartusche (1) nach einem der vorhergehenden Ansprüche, **dadurch gekennzeichnet, dass** der Sensor (38) in einem Bereich maximaler Feuchtigkeitsaufnahme und/oder maximaler Aufnahme von Verunreinigungen durch das Behandlungsmittel (Vorfilter 14; Zyklon 15; Koaleszenzfilter 26; Trockenmittel 31) angeordnet ist.

13. Kartusche (1) nach einem der vorhergehenden Ansprüche, **dadurch gekennzeichnet, dass** eine Auswerteelektronik (64) zur Verarbeitung der Daten oder Signale (63) des Sensors (38) vorgesehen ist.

14. Kartusche (1) nach Anspruch 13, **dadurch gekennzeichnet, dass** mit dem einen Kondensator (39) aufweisenden Sensor (38) ein Schwingkreis gebildet ist, dessen Eigenkreisfrequenz von der Kapazität des Kondensators (39) des Sensors (38) abhängig ist.

15. Kartusche (1) nach einem der vorhergehenden Ansprüche, **dadurch gekennzeichnet, dass** die Kartusche (1) eine Speichereinheit für Daten oder Signale des Sensors (38) besitzt.

16. Druckluftaufbereitungsanlage (47) für ein Kraftfahrzeug, ein Nutzfahrzeug, einen Anhänger oder ein Zugfahrzeug mit
a) einer Kartusche (1) zur Luftaufbereitung nach einem der Ansprüche 9-15,
b) einem Luftaufbereitungskreislauf (48),
c) einem Regenerationskreislauf (53) und
d) einer Steuereinrichtung (56) zur betriebsabhängigen Aktivierung des Regenerationskreislaufs (53) und des Luftaufbereitungskreislaufs (48),
**dadurch gekennzeichnet, dass**
e) eine Empfangseinrichtung (68) vorgesehen ist, über die Daten oder Signale (67) von der Übertragungseinrichtung (66) der Kartusche (1) empfangen werden können.

17. Druckluftaufbereitungsanlage (47) nach Anspruch 16, **dadurch gekennzeichnet, dass** eine Auswerteelektronik (64; 70) und/oder Steuereinrichtung (56) vorgesehen ist zur Auswertung der empfangenen Daten oder Signale.

18. Verfahren zum Betrieb einer Druckluftaufbereitungsanlage (47) nach Anspruch 16 oder 17, **dadurch gekennzeichnet, dass** die Steuereinrichtung (56)
a) einen Messwert des Sensors (38) überwacht und
b) bei Überschreiten oder Unterschreiten eines Schwellwerts des Messwerts oder einer Änderung desselben
ba) einen Regenerationsbetrieb (Regenerationskreislauf 53) einleitet,
bb) einen Regenerationsbetrieb (Regenerationskreislauf 53) einstellt.
bc) ein Signal zum Austausch der Kartusche (1) erzeugt,
bd) einen Druckluftaufbereitungsbetrieb (Druckluftaufbereitungskreislauf 48) einleitet, und/oder
be) einen Druckluftaufbereitungsbetrieb (Druckluftaufbereitungskreislauf 48) einstellt.

19. Verfahren nach Anspruch 18, **dadurch gekennzeichnet, dass** aus einem Messwert oder einem Satz von Messwerten des Sensors (38) eine Information über die Betriebsfähigkeit der Kartusche (1) ermittelt wird.

20. Verfahren nach Anspruch 19, **dadurch gekennzeichnet, dass** bei Ermittlung einer mangelhaften Betriebsfähigkeit ein für einen Fahrer oder ein Wartungspersonal erkennbares Informationssignal (71) erzeugt wird.

21. Verfahren nach Anspruch 19 oder 20, **dadurch gekennzeichnet, dass** zur Ermittlung der Betriebsfähigkeit der Kartusche (1) die Messsignale für unterschiedliche Regenerationsphasen ausgewertet werden.

22. Verfahren nach einem der Ansprüche 19 bis 21, **dadurch gekennzeichnet, dass** zur Ermittlung der Betriebsfähigkeit der Kartusche (1) eine zeitliche Änderung der Daten oder Signale ausgewertet wird.

23. Druckluftaufbereitungsanlage (47) mit einer Kartusche (1), die ein Behandlungsmittel (Vorfilter 14; Zyklon 15; Koaleszenzfilter 26; Trockenmittel 31) aufweist, welches in einem Luftaufbereitungskreislauf (48) die physikalischen Eigenschaften der Druckluft beeinflusst und die Druckluft in einem Regenerationskreislauf (53) wieder für eine weitere Luftaufbereitung vorbereitet, sowie mit einer Steuereinrichtung (56), die einen Wechsel oder ein Verhältnis zwischen einem Regenerationskreislauf (53) und einem Luftaufbereitungskreislauf (48) steuert oder regelt, **dadurch gekennzeichnet, dass** auf der Ausgangsseite der Kartusche (1) ein Sensor (62) mit der durch die Kartusche (1) geleiteten Luft beaufschlagt ist, wobei der Sensor (62) die Feuchte der Druckluft erfasst, und in der Steuereinrichtung (56) in Abhängigkeit der ermittelten Feuchte eine Beurteilung
- der Betriebsfähigkeit der Kartusche (1),
- einer Notwendigkeit einer Einleitung eines Regenerationsbetriebs,
- einer Notwendigkeit einer Beendigung eines Regenerationsbetriebs,
- einer Notwendigkeit einer Einleitung eines Druckluftaufbereitungsbetriebs und/oder
- einer Notwendigkeit einer Beendigung eines Druckluftaufbereitungsbetriebs erfolgt.

24. Druckluftaufbereitungsanlage nach Anspruch 23, **dadurch gekennzeichnet, dass** ein erster Sensor (61) auf der Eingangsseite der Kartusche (1) vorgesehen ist sowie ein zweiter Sensor (62) auf der Ausgangsseite der Kartusche (1) vorgesehen ist und über eine Ermittlung einer Beziehung eines Messsignals (72) des ersten Sensors (61) und eines Messsignals (73) des zweiten Sensors (62) oder einer Änderung der Messsignale eine Beurteilung
- der Betriebsfähigkeit der Kartusche (1),
- einer Notwendigkeit einer Einleitung eines Regenerationsbetriebs,
- einer Notwendigkeit einer Beendigung eines Regenerationsbetriebs,
- einer Notwendigkeit einer Einleitung eines Druckluftaufbereitungsbetriebs und/oder
- einer Notwendigkeit einer Beendigung eines Druckluftaufbereitungsbetriebs erfolgt.
